# EUROPÄISCHE PATENTSCHRIFT

(11) **EP 0 603 775 B1**
(45) Veröffentlichungstag und Bekanntmachung des Hinweises auf die Patenterteilung: **04.09.1996**
(21) Anmeldenummer: 93120475.4
(22) Anmeldetag: 18.12.1993
(51) Int. Cl.: F16L 41/14, F16L 47/00

(54) **Verfahren zum dichtschliessenden Verbinden eines Kanalrohrs mit einem Anschlussrohr und verspannbares Anschlussrohr hierfür**
Method for making a sealed connection between a pipe and a pipe connector, and pipe connector used therefor, which can be tightened
Méthode pour effectuer des connexions étanches entre un tuyau et un raccord de tuyau, et un raccord de tuyau serrable utilisé à cet effet

(30) Priorität: 24.12.1992 DE 4244127; 19.10.1993 DE 9315912 U
(43) Veröffentlichungstag der Anmeldung: 29.06.1994
(73) Patentinhaber: KUNSTSTOFFRÖHREN SENDENHORST GmbH, D-48324 Sendenhorst (DE)
(72) Erfinder: Funke, Norbert, D-48324 Sendenhorst (DE)
(74) Vertreter: Hoffmeister, Helmut, Dr. Dipl.-Phys.

(56) Entgegenhaltungen:
- DE-A- 3 446 360
- FR-A- 2 233 555

## Beschreibung

Die Erfindung betrifft ein Verfahren zum dichtschließenden Verbinden eines Kanalrohrs mit einem Anschlußrohr und ein verspannbares Anschlußrohr hierfür, das an einem Ende mit einer umlaufenden Kammer versehen ist.

Ein Verfahren und ein Anschlußrohr der eingangs genannten Art ist aus der DE 34 46 360 A1 bekannt. In ein Kanalrohr wird eine Öffnung eingebracht. Zur Gewährleistung der Verbindung zwischen dem Kanalrohr und dem Anschlußrohr verfügt das Anschlußrohr über ein Einsatzstück, dessen zum Einsetzen in die Öffnung bestimmtes Ende die Form eines nach außen gerichteten Bundes mit einem Außendurchmesser im wesentlichen gleich dem Durchmesser der der Öffnung aufweist. Das andere zur Aufnahme der Abzweigleitung bestimmte Ende hat außen ein Gewinde. Das Anschlußrohr ist mit einem Einsatzstück versehen, dessen Außendurchmesser kleiner als die Außendurchmesser des Bundes und des mit Gewinde versehenen Endes ist. Darüber hinaus verfügt das Anschlußrohr über einen Spannring. In eine sich bildende Dichtungskammer wird ein ┌-förmiger Dichtring eingelegt, der dann mit dem Spannring verspannt wird.

Nachteilig ist, daß die Dichtung auf der Oberfläche des Kanals aufliegt und nur zwischen Dichtungskammer und der Innenwand der Öffnung gelangt. Dadurch besteht zwischen der Innenfläche des Kanals und dem Abzweigrohr eine unvollkommene Dichtung, so daß die Dichtung nicht sicher ist. Das führt dazu, daß sie öfters erneuert werden muß und damit ihre Herstellung aufwendig wird. Gehalten wird das Abzweigrohr durch eine außen auf dem Kanalrohr aufliegende Stützschale.

Aus der DE 37 16 973 A1 ist ebenfalls ein dichtschließendes Verbinden eines Kanalrohrs mit einem Anschlußrohr bekannt. Das Anschlußrohr verfügt über eine Haltenut. In diese Haltenut wird ein abgewinkelter Dichtungsring eingelegt und danach der Dichtungsring mit dem Anschlußrohr in eine vorbereitete Öffnung des Kanals gebracht.

Auch wenn der Dichtungsring nach dem vollständigen Einbringen des Anschlußrohrs in die Öffnung mit einer anderen Rasterwulst im Anschlußrohr verankert wird, besteht trotzdem nur eine Abdichtung zwischen der Innenwand der Öffnung des Kanals und dem Anschlußrohr sowie eine Abdichtung mit der Außenwand des Kanals, so daß diese Dichtung wegen einer fehlenden Abdichtung zur Innenwand des Kanals ebenfalls nicht sicher ist. Darüber hinaus ist die Dichtung auch hier vollständig von einer unverändert bestehenden Elastizität des Dichtungsringes abhängig, die noch zusätzlich von außen auf das Anschlußrohr wirkenden Kräfte aufnehmen muß.

In der AT 332 815 wird ein Dichtring für Außenverbindungen zwischen einem Kanalrohr und einem zu diesem etwa senkrecht stehenden Anschlußrohr angegeben. Hierzu wird eine in das Kanalrohr eingebrachte Öffnung mit einem Dichtring versehen. Der Dichtring weist eine doppel-T-ähnliche Konfiguration auf, wobei beide T-Schenkel so geneigt sind, daß sie als Lippen die Wand der Öffnung innen und außen umfassen. Zwischen die entgegengesetzt zeigenden Lippenpaare der T-Schenkel wird das Anschlußrohr gedrückt.

Nachteilig ist, daß obwohl die Dichtung sich an die Innen- und Außenwand anlehnt, die eigentliche Dichtung nur zwischen dem geraden Anschlußrohr und der gegenüberliegenden Fläche des Dichtringes zustande kommen kann. Ein weiterer Nachteil ist, daß die Dichtung nur in geraden Kanalwänden einsetzbar ist. Ist die Abwinklung der Kanalwand größer als 10°, kommt es zu einer Verschlechterung der Dichtigkeit. Darüber hinaus muß die Dichtung zugleich alle auf das Anschlußrohr wirkenden Kräfte aufnehmen.

Weiterhin ist ein dichtschließendes Verbinden eines Kanalrohrs mit einem Anschlußrohr in der DE 36 18 963 C2 beschrieben. In das Kanalrohr wird eine entsprechende Öffnung eingebracht, die in der Form und den Abmessungen der Mündung des Anschlußrohres entspricht. Bevorzugterweise wird der Durchbruch etwas größer bemessen, um Toleranzen ausgleichen zu können. In die Öffnung wird das Anschlußrohr geschoben. Zur Abdichtung des Spaltes wird mit einem Gestänge von innen her mit einer Halterung ein gegenüber der Öffnung vergrößerter Schild angeordnet. An den Schildrandteilen ist ein etwa sackartiger, elastischer Balg befestigt. Der freie Endteil des Balgs ist an einem vom Schild abstrebenden rohrförmigen Halteorgan befestigt. Letzteres trägt auch eine im Inneren des Balgs angeordnete Heizung. Auf der Außenseite des Balgs ist eine Polyester-Spachtelmasse aufgetragen. Mit Hilfe von Druckluft wird die Spachtelmasse zwischen Öffnung und Anschluß abdichtend gedrückt und unter Hitzeeinwirkung ausgehärtet. Nachteilig ist, daß die so dichtschließende Verbindung zwischen dem Kanalrohr und dem Anschlußrohr nur mit einem hohen Material- und Montageaufwand herstellbar ist.

Der Erfindung liegt die Aufgabe zugrunde, ein Verfahren zum dichtschließenden Verbinden eines Kanalrohrs mit einem Anschlußrohr anzugeben, mit denen eine dichtschließende Verbindung einfach herstellbar und eine dauerhafte und sichere Abdichtung zwischen Kanalrohr und Anschlußrohr sowie eine Halterung des Anschlußrohrs im Kanalrohr gegeben ist.

Erfindungsgemäß wird die Aufgabe mit folgenden Schritten gelöst:
- das Kanalrohr wird mit einer Abzweigöffnung versehen,
- in die Dichtungshaltekammer wird eine Ringdichtung eingelegt, die eine über die Außenseite der Dichtungshaltekammer reichende Dichtungslippe mit einem eine Endverdickung ausbildenden oder versehenen Ende besitzt,
- das Anschlußrohr wird mit der Dichtungshaltekammer voran in die Öffnung geschoben, und zwar so weit, daß die beim Einschieben in die Dichtungshaltekammer eingestülpte Dichtungslippe unter den Innenrand des Kanalrohrs gelangt und ausgestülpt wird,
- anschließend das Anschlußrohr in der Öffnung nach außen gezogen und verspannt wird, so daß die Dichtungslippe mit der Endverdickung den Spalt zwischen der Dichtungshaltekammer und der Innenfläche des Kanalrohrs verschließt.

Die mit der Erfindung erzielten Vorteile bestehen bei der Herstellung der dichtschließenden Verbindung insbesondere darin, daß das Anschlußrohr nach dem Einlegen der Ringdichtung in die Dichtungskammer lediglich durch die eingebrachte Öffnung hindurchgeschoben werden muß und danach nur nach einem leichten Hochziehen sofort die dichtende Wirkung eintritt. Die Dichtungslippe und die Endverdickung werden dabei unbeschädigt durch die Öffnung hindurch transportiert, um sich danach im Freien voll für ihre abdichtende Wirkung entfalten zu können.

Um das Einbringen des Anschlußrohres zu erleichtern, werden die glatten Innenflächen der Öffnung mit einem Gleitmittel bestrichen. Das ist insbesondere dann von Bedeutung, wenn das Rohr aus zwei Teilrohren besteht, z. B. aus einem Beton- und einem Kunststoffrohr.

Vorteilhaft ist es, wenn die Verspannung des Anschlußrohres gegenüber dem Kanalrohr mit Hilfe einer an sich bekannten Verspanneinrichtung vorgenommen wird. Hierdurch wird die Verspannung so vorgenommen, daß sie den konkreten Einsatzbedingungen entspricht.

Vorteilhaft ist es, wenn um das Anschlußrohr und auf die Außenfläche des Kanals ein Auflagering gelegt wird, der gemeinsam mit der Ringdichtung mit der Verspanneinrichtung verspannt wird. Hierdurch wirkt die bereits beschriebene vorteilhafte Wirkung einer dauernden Zugspannung auf die Ringdichtung ein, so daß es zu keiner Undichtigkeit aufgrund von Lockerungen des Spannelements kommen kann.

Von besonderem Vorteil ist, wenn das Anschlußrohr in die Öffnung in einem beliebigen Winkel zwischen 20 und 90° zur Längsachse des Kanalrohrs eingeschoben und verspannt wird. Hierdurch ist es möglich, Anschlüsse in jedem Winkel zum Hauptkanalrohr vornehmen zu können.

Vorteilhaft ist es, wenn ein Kunststoffschaum mit Hilfe eines Einbringungs-Lenk- und Verteilungssystems von außerhalb der Außenfläche des Kanalrohrs in einen durch die Abzweigöffnung und das Anschlußrohr gebildeten umlaufenden Raum gelenkt wird, der nach dem Erstarren ein Schaumdichtungs- und Halterungselement ausbildet. Hierbei wird nach dem Einbringen des Abzweigrohres in die Öffnung und einem Abdichtung durch die Ringdichtung nachher der noch verbleibende Raum zwischen der Innenfläche der Öffnung in der Rohrwand und der Außenfläche der Abzweigöffnung vollkommen ausgeschäumt. Der in die Eintrittsausnehmung eingegebene Schaum wird über das System in diesen Bereich geleitet und füllt den Raum vollständig aus und bildet somit nach dem Erkalten eine zusätzliche Abdichtung und Halterung. Darüber hinaus wird die freie Betonfläche der Öffnung vollkommen abgedeckt und gegen jegliche Nässeeinwirkung geschützt. Hierdurch wird ein Angreifen dieses Bereiches durch Luft bzw. Feuchtigkeit unterbunden. Durch die so ausgebildete Schaumstoffdichtung und die eingebrachte Ringdichtung werden das Kanalrohr und das Abschlußrohr praktisch doppelt dichtschließend verbunden. Darüber hinaus wird das Anschlußrohr durch den aushärtenden Kunststoffschaum in der Öffnung verpreßt. Hierdurch kommt es zu einer sehr ausgeprägten und stabilen Halterung des Anschlußrohrs in der Öffnung, so daß der erstarrte Kunststoff nicht nur die Funktion eines zusätzlichen Dichtungs-, sondern auch die eines Halterungselementes übernimmt.

Zur Lösung der Aufgabe ist ein verspannbares Anschlußrohr für ein Kanalrohr, das eine Abzweigöffnung besitzt, zum Versehen mit einer Abzweigung und der Durchführung des Verfahrens, mit einer an einem Ende des Anschlußrohres angeordneten Dichtungshaltekammer, in die eine Ringdichtung eingelegt ist, die eine über die Außenseite der Dichtungshaltekammer reichende Dichtungslippe mit einem eine Endverdickung ausbildenden oder eine Endverdickung versehenen Ende und einer Verspanneinrichtung, mit der die Ringdichtung verspannbar ist, versehen. Hierbei nimmt die Dichtungskammer eine im wesentlichen kompatible Ringdichtung auf. Die Dichtungslippe und der daran angeformte Dichtungsring sorgen für eine dauerhafte und sichere Abdichtung zwischen der Innenfläche des Kanalrohrs und dem Anschlußstück. Diese Form des dichtschließenden Verbindens hat darüber hinaus den Vorteil, daß sie jederzeit gelöst und durch eine neue ersetzt werden kann. Darüber hinaus ist diese Form des dichtschließenden Verbindens eines Kanalrohrs mit einem Anschlußrohr nicht an ein besonderes Medium, z. B. Abwasser gebunden.

Vorteilhaft ist es, wenn die Ringdichtung im wesentlichen L-förmig profiliert ist, und daß der untere Schenkel in die Dichtungslippe übergeht. Hierdurch ist gewährleistet, daß die Ringdichtung lagegerecht in der Dichtungshaltekammer aufgenommen und beim Einbringen des Anschlußrohrs geformt wird.

Vorteilhaft ist es, wenn das Ende der Dichtungslippe eine Verdickung trägt. Damit ergibt sich beim Hochziehen des Anschlußrohres in der Öffnung des Kanalrohrs eine abdichtende Verbindung an der Innenseite des Kanalrohrs. Die Dichtung wird also dort vorgenommen, wo das abzudichtende Medium, nämlich das Schmutzwasser, auf- und in das Anschlußrohr eintritt.

Vorteilhaft ist es, wenn an der Innenseite der L-förmigen Ringdichtung wenigstens eine Einbringung angebracht ist. Diese sorgt dafür, daß beim Hineindrücken des Anschlußrohrs sich die Ringdichtung ohne Beschädigung verformen kann, da sie vollkommen von der Dichtungskammer aufnehmbar ist.

Vorteilhaft ist es, wenn die Ringdichtung mit der Dichtungslippe und der angeformten Endverdickung ebenfalls aus Gummi besteht. Die aus Gummi bestehende Ringdichtung sorgt für ein sicheres Abdichten, wobei insbesondere bei einem härteren Gummi gewährleistet ist, daß härtere Gegenstände im Fluidum nicht zu einer Beeinträchtigung des Dichteverhaltens führen können.

Vorteilhaft ist es, wenn um das Anschlußrohr und auf die Außenfläche des Kanalrohrs ein Auflagering gelegt ist, der gemeinsam mit der Ringdichtung mit der Verspanneinrichtung verspannt ist. Mit der Verspanneinrichtung läßt sich mit entsprechenden Zusatzelementen die Ringdichtung so verspannen, daß eine ausgezeichnete Dichtigkeit gewährleistet ist.

Vorteilhaft ist es, wenn das Anschlußrohr wenigstens teilweise ein Außengewinde trägt, auf der die Spanneinrichtung, z. B. ein Gewindering, eine Spannmutter oder dergleichen angeordnet ist. Dabei sollte das Gewinde in vorteilhafter Weise möglichst über dem Auflagering liegen.

Vorteilhaft ist es, wenn das Anschlußrohr mit der angeformten Dichtungshaltekammer aus Kunststoff besteht. Gerade dieses Material ist durch seine nichtrostenden und elastischen Eigenschaften besonders für die besondere Formgebung dieses speziellen Verbindungselementes geeignet. Vermieden werden dadurch insbesondere Abplatzungen, die sich aus der Spröde des Materials ergeben können.

Vorteilhaft ist es, wenn in das Anschlußrohr ein Einbringungs-Lenk- und Verteilungssystem integriert ist, mit dem ein Kunststoffschaum in einen durch das Anschlußrohr und die Abzweigöffnung gebildeten Raum so einbringbar ist, daß nach dessen Aushärtung in den Raum ein Schaumstoffdichtungs- und -Halterungselement angeordnet ist. Hierdurch wird zum einen die Innenwand der Anschlußöffnung und die darin freiliegende Bewehrung geschützt, der Anschluß von außen abgedichtet und fest in der Öffnung gehalten.

Vorteilhaft ist es, wenn das Innenrohr und das Anschlußrohr einen Hohlraum umschließt, der im Bereich der Außenfläche mit der Eintrittsausnehmung und im Bereich der Innenfläche des Kanalrohrs mit wenigstens einer Austrittsausnehmung im Anschlußrohr versehen ist, die das Einbringungs-Lenk- und Verteilungssystem bilden. Selbstverständlich ist es auch möglich, das Einbringungs-Lenk- und Verteilungssystem durch besondere Kanalführungen im Anschlußrohr zu bilden und die Anzahl und die Anordnung der Ausnehmungen entsprechend anzupassen. Ermöglicht wird durch die besondere Ausgestaltung des Einbringungs-Lenk- und Verteilungssystems ein schnelles, einfaches und gezieltes Einbringen des Polyurethanschaums. Insbesondere wird gewährleistet, daß der Raum zwischen dem Anschlußrohr und der Abzweigöffnung vollkommen befüllbar ist.

Ein Ausführungsbeispiel der Erfindung ist in der Zeichnung dargestellt und wird im folgenden näher beschrieben. Es zeigen:
- Fig. 1: ein Einschieben eines Anschlußrohrs in ein Kanalrohr zum dichtschließenden Verbinden des Kanalrohrs mit dem Anschlußrohr in einer geschnittenen schematischen Darstellung,
- Fig. 2: ein dichtschließendes Verbinden eines Kanalrohrs mit einem Anschlußrohr in einem eingebauten Zustand in einer teilgeschnittenen, schematischen Darstellung,
- Fig. 3: ein Anschlußrohr für eine Verbindung gemäß Fig. 1 und 2 in einer schematischen perspektivischen Darstellung,
- Fig. 4a, 4b und 4c: ein Anschlußrohr gemäß Fig. 3 während, nach einem Einschub sowie nach einem Verspannen in einer teilgeschnittenen schematischen Darstellung,
- Fig. 5: eine Ringdichtung für ein Anschlußrohr gemäß den Fig. 1 bis 4.

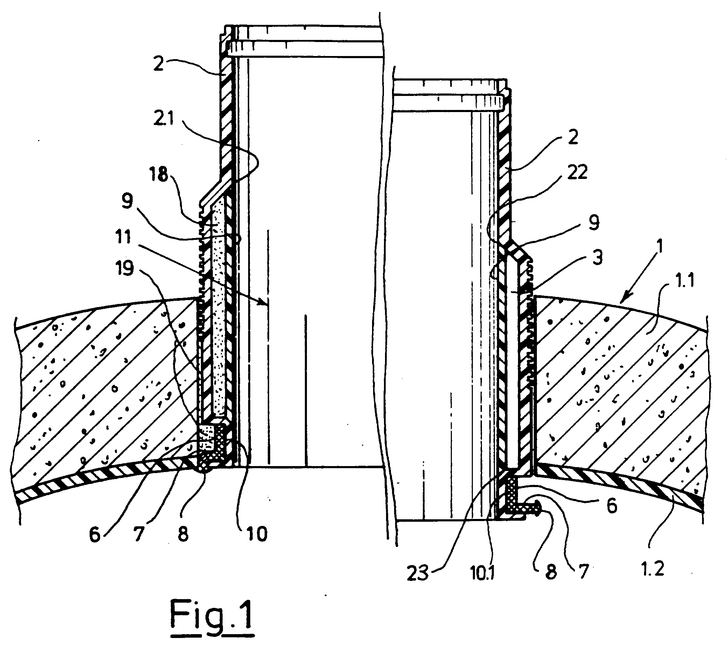

In ein Kanalrohr 1 wird, wie insbesondere Figur 1 zeigt, eine Abzweigöffnung 11 eingebracht. Im Ausführungsbeispiel ist das Kanalrohr 1 als Inliner-Rohr, bestehend aus einem äußeren Betonrohr 1.1 und einem inneren Kunststoffrohr 1.2 ausgebildet. Auch andere Innenauskleidungen sind denkbar, z. B. glattwandige Rohre mit Rippen, Stegplatten oder Innenanstriche. Selbstverständlich ist es auch möglich, daß das Kanalrohr 1 nur aus Beton, Steingut, Keramik, Porzellan, Kunststoff, Blech oder dergleichen besteht und nicht nur eine runde, sondern eine eckige oder andere äußere Form haben kann. Die Abzweigöffnung 11 kann dabei entweder im rechten Winkel, zu 45° oder in einem anderen beliebigen Winkel zur Längsachse des Kanalrohres 1 eingebracht werden. Dadurch ist es möglich, daß in die in einem bestimmten Winkel eingebrachte Abzweigöffnung 11 ein Anschlußrohr 2 eingeschoben wird.

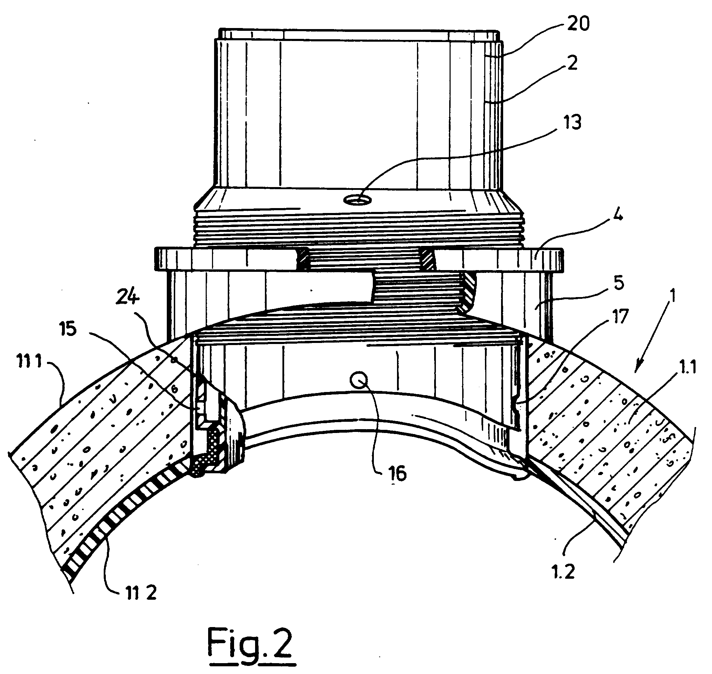

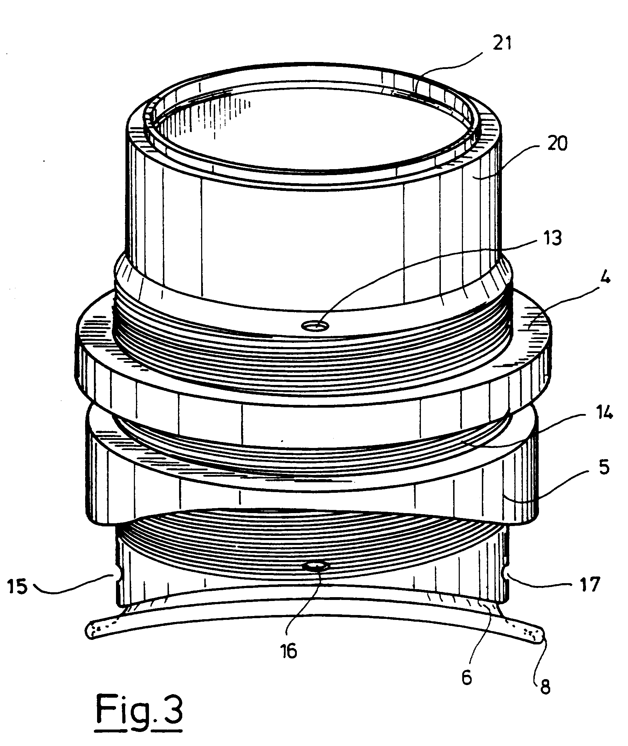

Das Anschlußrohr 2 weist, wie die Figuren 1, 2, 3, 4a, 4b und 4c zeigen, an seiner oberen Seite einen nach außen zeigenden Anschlußring 20 auf. In diesen Anschlußring 20 ist eine Dichtung einlegbar. Unterhalb des Anschlußrings 20 weitet sich der Durchmesser des Anschlußrohrs 2 auf, um dann anschließend in eine Dichtungshaltekammer 10 überzugehen. Die Dichtungshaltekammer 10 ist in ihrem Querschnitt ]-förmig oder auch U-förmig, wobei das U auf einem seiner Seitenschenkel liegt, ausgebildet. In das Anschlußrohr ist ein Innenrohr 9 eingelegt, das unterhalb des Anschlußrings 20 an der Innenfläche 2.1 des Anschlußrohrs und an der Außenfläche 10.1 der Dichtungskammer befestigt ist. Die Befestigung wird dabei so hergestellt, daß eine dicht schließende Schweißnaht an beiden Stellen hergestellt wird. Der eine Vorteil dieses Innenrohrs 9 besteht darin, daß bei einfließendem Abwasser sich vor der Dichtungskammer 10 kein Schmutz und keine größeren Gegenstände ablagern können, so daß hierdurch eine Verschmutzung bzw. Verstopfung vermieden wird. Ein weiterer Vorteil ist, daß hierdurch ein Hohlraum 3 gebildet wird.

In die Wand des Anschlußrohrs 2 werden eine Eintrittsausnehmung 13 und vier Austrittsausnehmungen 15, 16, 17 eingebracht. Die Eintrittsausnehmung 13 wird dabei so angeordnet, daß sie vorzugsweise über der Außenwandung 111 des Rohrs 1 und die Austrittsöffnungen 15, 16, 17 im Bereich der Abzweigöffnung 11, vorzugsweise in der Nähe der Innenwandung 112 des Rohrs angeordnet sind. Die Austrittsausnehmungen 15, 16, 17 sind in gleichen Abständen zueinander auf dem äußeren Umfang des Anschlußrohrs verteilt.

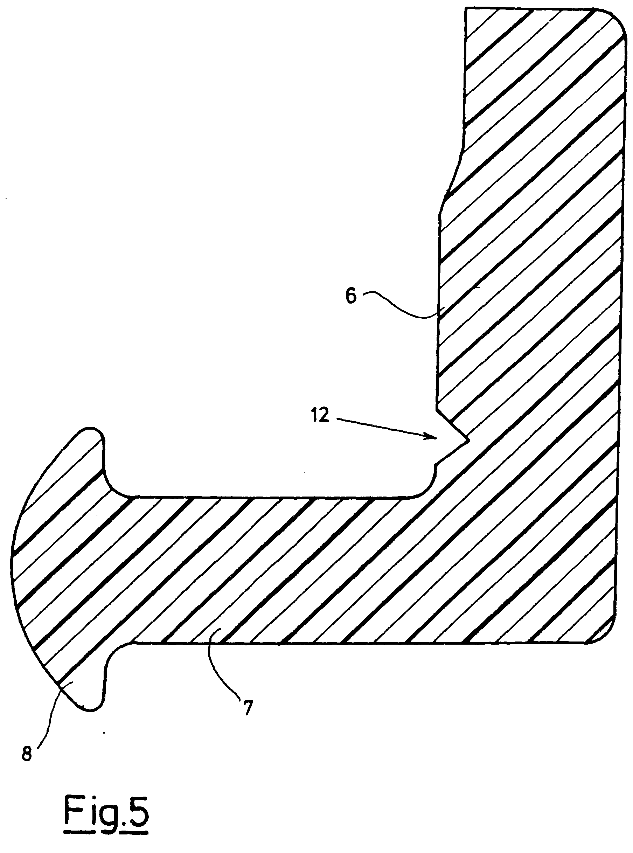

In die Dichtungskammer 10 ist eine Ringdichtung 6 eingelegt. Die Ringdichtung 6 weist, wie Figur 5 zeigt, eine im wesentlichen L-förmige Form auf. Sie kann auch ]-förmig ausgestaltet sein. An ihrer Innenseite ist eine Einbringung 12 angebracht. Die Einbringung 12 ist V-förmig ausgebildet. Unterhalb der Einbringung 12 erstreckt sich im rechten Winkel eine Dichtungslippe 7 nach außen, die vorn in eine Verdickung oder einen Dichtungshilfsring 8 übergeht. Die an der Dichtungslippe 7 angeformte Verdickung 8 hat eine im wesentlichen pilzförmige Gestalt und besteht aus einem elastischen Dichtungswerkstoff. Vorzugsweise wird als Dichtungswerkstoff ein Gummi eingesetzt. Damit die so ausgebildete Ringdichtung 6 selbst fest in der Dichtungskammer 10 festhält, kann sie z.B. mit einem Klebemittel in dieser befestigt.

Über das Anschlußrohr 2 ist ein Auflagering 5 schiebbar. Dieser weist an seiner zum Rohr 1 gerichteten Fläche einer der gewölbten Außenwandung 11 angepaßte Form auf, während die Gegenfläche glatt ausgebildet ist. Darüber hinaus ist das Anschlußrohr 2 mit einem Außengewinde 14 versehen. Auf dieses Gewinde aufsetzbar ist eine Verspanneinrichtung in Gestalt eines Gewinderinges 4, der als Spannring mit eingebrachten Bohrungen versehen ist.

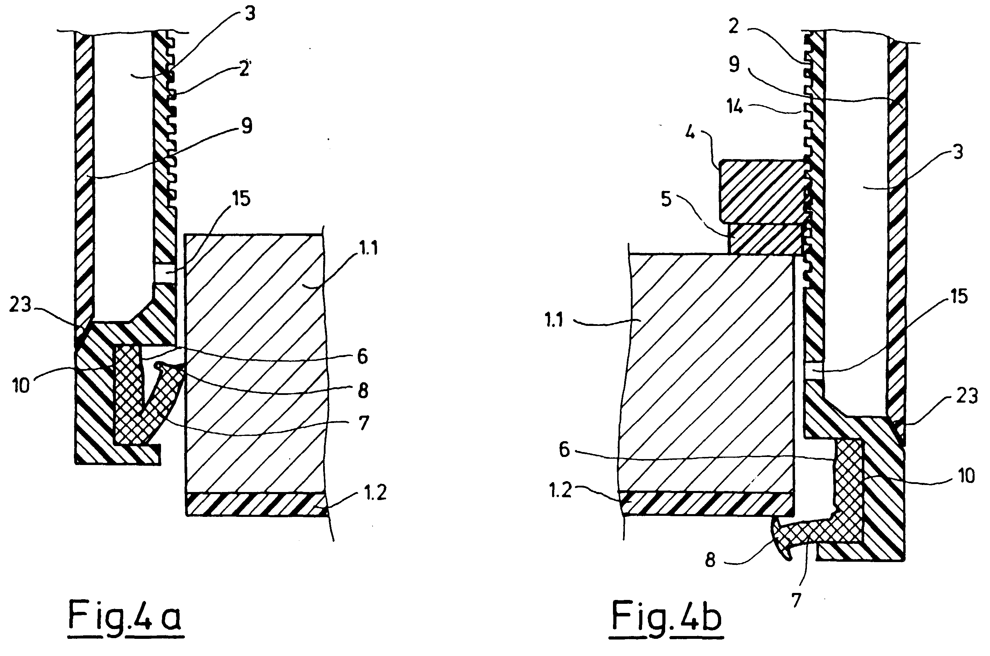

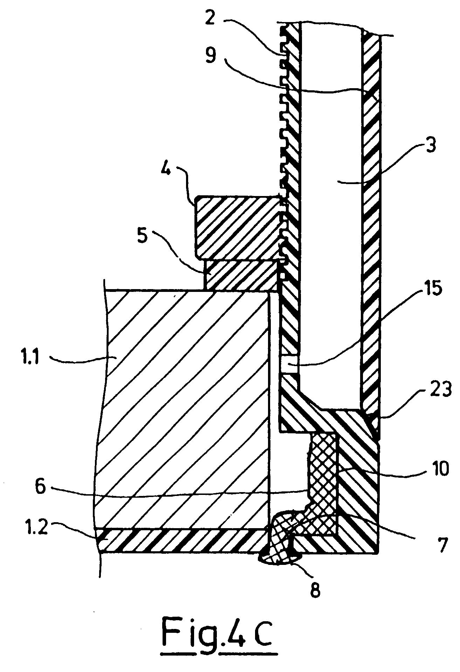

Damit das Anschlußrohr 2 in die Abzweigöffnung 11 eingeschoben werden kann, wird diese vorher gut gereinigt und mit einem Gleitmittel ausgekleidet. Danach wird das Anschlußrohr 2 mit der Ringdichtung 6 in die Abzweigöffnung 11 eingeschoben. Die Dichtungslippe 7 mit dem daran angeformten Dichtungshilfsring legt sich dabei, wie Figur 4a zeigt, nach innen in den freien Raum vor das gerade Teil der Ringdichtung 6. Die Einbringung 12 ermöglicht ein leichtes Einschlagen der Dichtungslippe 7, ohne daß dabei die Ringdichtung 6 an irgendeiner Stelle verletzt wird. Ist das Anschlußrohr 2 vollständig durch die Abzweigöffnung 11 hindurchgeschoben, löst sich, wie Figur 4b zeigt, die Dichtungslippe 7 mit dem Dichtungshilfsring 8 aus der Dichtungskammer 10. Durch ein Hochziehen des Anschlußrohres 2 wird , wie Fig. 4c zeigt, die Dichtungslippe 7 umgestülpt, so daß diese in den Spalt zwischen dem unteren Schenkel und das Kunststoffrohr 1.2 gelangt. Gleichzeitig legt sich die pilzförmig ausgebildete Verdickung mit ihrer glatten Innenfläche abschließend über diesen Spalt, so daß dieser Spalt innig abgedichtet wird. Hierdurch wird eine haltbare und sichere Dichtung zwischen der Innenfläche 112 des Kanalrohrs 1 hergestellt. Im Ausführungsbeispiel wird dabei die Dichtung zwischen der Innenfläche 112 des Kunststoffrohrs 1.2 bewirkt. Danach wird über das Anschlußrohr 2 der Auflagering 5 geschoben und paßgenau auf die gekrümmte Außenfläche 111 des Kanalrohrs 1, d. h. des Betonrohrs 1.1, aufgelegt und der Gewindering 4 mit beiden Händen handfest angezogen. Dies sollte aber nicht mit Gewalt geschehen, da es sonst zu einer Überdehnung bzw. Überdrehung der Dichtung kommen kann. Mit den zusätzlich in das Spannelement eingebrachten Bohrungen ist mittels eines Schraubenziehers oder einem ähnlichen Element eine Verspannung möglich. Zur Sicherheit wird mit der Hand am unteren Rand des Anschlußrohres, auch Sattelstück genannt, kontrolliert, ob die Verdickung 8 der Ringdichtung 6 korrekt zwischen der Innenfläche 112 des Kunststoffrohrs 1.2 und der Dichtungshaltekammer 10 des Anschlußrohrs 2 (Sattelstück) gepreßt ist. Danach wird ein Polyurethanschaum 18 in die Eintrittsausnehmung 13 eingebracht. Dieser Polyurethanschaum befindet sich in einer separaten Spraydose mit einem Inhalt von etwa 100 ml. Vor dem Gebrauch ist die Dose gut zu schütteln. Dabei ist darauf zu achten, daß die Haftflächen fett- bzw. staubfrei sind. Das in die Abzweigöffnung 11 eingebrachte Gleitmittel ist dabei so ausgewählt, daß es keine Fettbestandteile enthält und nach dem Einschieben des Abzweigrohrs sehr schnell verflüchtigt und zugleich für eine absolute Staubfreiheit sorgt. Dem Innenrohr 9, das, wie bereits beschrieben, in das Anschlußrohr eingepaßt worden ist, kommt dabei eine zweite wesentliche Funktion zu. Es bildet zusammen mit der Innenfläche 2.1 des Anschlußrohrs 2 wie bereits erwähnt den Hohlraum 3. Dieser Hohlraum 3 ist jeweils mit Schweißverbindungen 22 und 23 vollkommen dicht abgeschlossen. In diesen Hohlraum 3 dringt nun der von der Dose in die Eintrittsöffnung 13, die wesentlich über dem Niveau der Außenwandung 111 liegt, ein. Er verteilt sich in dem Hohlraum 3 und füllt diesen, wie in Figur 1 gezeigt, voll aus. Ist der Hohlraum 3 vollständig ausgefüllt, dringt der Polyurethanschaum 18 aus den Austrittsöffnungen 15, 16, 17 aus und gelangt so in einen Raum 24 zwischen Anschlußrohr 2 und Abzweigöffnung 11. Er füllt diesen Raum 24, der durch den Spalt zwischen der Außenwandung des Anschlußrohrs 2 und der Innenfläche der Abzweigöffnung 11 und den frei gewordenen Raum vor dem geraden Teil der Ringdichtung 6 gebildet wird, vollständig aus. Durch den Druck auf einen Adpater kann der ausgetretene Schaum durch Fingerdruck entsprechend reguliert werden. Die Dose ist dabei vollständig zu entleeren. Überschüssiger Polyurethanschaum 18 drückt sich von selbst nach außen und kann im Bereich der Außenfläche 111 entfernt werden. Hierfür ist der Bereich der Außenfläche 111 um die Abzweigöffnung 11 herum ausreichend anzufeuchten, notfalls zu wässern. Nach etwa 20 Minuten ist der Polyurethanschaum 18 klebefrei und nach 5 - 10 Stunden ausgehärtet. Frische Polyurethanschaumspritzer können mit einem speziellen Lösemittel entfernt werden. Nach dem Aushärten des Polyurethanschaums 18 bildet sich dann ein Schaumstoffdichtungs- und -halterungselement 19 aus. Dieses dichtet gemeinsam mit der Ringdichtung 6 eine doppelt ausgebildete abdichtende Verbindung zwischen dem Anschlußrohr 2 und dem Rohr 1. Durch das Schaumstoffdichtungs- und -halterungselement 19 wird darüber hinaus der in der Abzweigöffnung freigelegte Beton und darin eingebrachte Bewehrungen wirksam versiegelt und abgeschirmt. Hierdurch kann an diese Flächen keine Feuchtigkeit und Luft gelangen, so daß eine Zerstörung vermieden wird. Darüber hinaus sorgt das Schaumstoffdichtungs- und -halterungselement 19 dafür, daß das Anschlußrohr 2 in der Abzweigöffnung 11 des Kanalrohrs 1 vollständig eingebunden ist. Hierdurch wird eine solche Verbindung zwischen dem Anschlußrohr 2 und dem Kanalrohr 1 erreicht, als wenn diese von vornherein als eine Einheit gefertigt worden wären. Wesentlich ist, daß für die Installation außer einer genauen Bohrvorrichtung keine besonderen Materialien notwendig sind, so daß ein solches Anschlußrohr zu jeder Jahreszeit und auf jeder Baustelle eingebaut werden kann. Von weiterem Vorteil ist, daß nach dem Ausschäumen sofort weitergearbeitet werden kann, denn das Ausschäumen steht mit dem Anschließen des Rohres keinerlei Zusammenhang. Durch diese spezielle Anschlußtechnologie ist es möglich, schnell und sicher Anschlußrohre 2 in das Kanalrohr 1 einzubringen. Danach wird in das Anschlußrohr 2 ein Abzweigrohr gesteckt. Die in den Anschlußring 20 eingelegte Anschlußdichtung 21 umschließt dabei abdichtend das Abzweigrohr. Überraschenderweise wurde gefunden, daß sich als Abzweigrohre nicht nur Rohre aus Kunststoff, sondern aus Beton, aus Keramik und dergleichen sowie Inliner-Rohre eignen.

### Bezugszeichenliste:

- 1: Kanalrohr
- 1.1: Betonrohr
- 1.2: Kunststoffrohr
- 2: Anschlußrohr
- 2.1: Innenfläche
- 3: Hohlraum
- 4: Gewindering
- 5: Auflagering
- 6: Ringdichtung
- 7: Dichtungslippe
- 8: Verdickung
- 9: Innenrohr
- 10: Dichtungshaltekammer
- 10.1: Außenfläche
- 11: Abzweigöffnung
- 12: Einbringung
- 13: Austrittsausnehmung
- 14: Außengewinde
- 15: Austrittsausnehmung
- 16: Austrittsausnehmung
- 17: Austrittsausnehmung
- 18: Polyurethanschaum
- 19: Schaumstoffdichtungs- und -halterungselement
- 20: Anschlußring
- 21: Anschlußdichtung
- 22: Schweißverbindung
- 23: Schweißverbindung
- 24: Raum
- 111: Außenfläche
- 112: Innenfläche

## Patentansprüche

1. Verfahren zum dichtschließenden Verbinden eines Kanalrohrs (1) mit einem Anschlußrohr (2), das an einem Ende mit einer umlaufenden Dichtungshaltekammer (10) versehen ist, mit folgenden Verfahrensschritten:
- das Kanalrohr (1) wird mit einer Abzweigöffnung (11) versehen,
- in die Dichtungshaltekammer (10) wird eine Ringdichtung (6) eingelegt, die eine über die Außenseite der Dichtungshaltekammer reichende Dichtungslippe (7) mit einem eine Endverdickung (8) ausbildenden oder versehenen Ende besitzt,
- das Anschlußrohr (2) wird mit der Dichtungshaltekammer (10) voran in die Öffnung (11) geschoben, und zwar so weit, daß die beim Einschieben in die Dichtungshaltekammer (10) eingestülpte Dichtungslippe (7) unter den Innenrand des Kanalrohrs (1) gelangt und ausgestülpt wird,
- anschließend das Anschlußrohr (2) in der Öffnung (11) nach außen gezogen und verspannt wird, so daß die Dichtungslippe (7) mit der Endverdickung (8) den Spalt zwischen der Dichtungshaltekammer (10) und der Innenfläche (112) des Kanalrohrs (1) verschließt.

2. Verfahren nach Anspruch 1, dadurch gekennzeichnet, daß die Verspannung des Anschlußrohres (2) gegenüber dem Kanalrohr (1) mit Hilfe einer an sich bekannten Verspanneinrichtung (4) vorgenommen wird.

3. Verfahren nach Anspruch 2, dadurch gekennzeichnet, daß um das Anschlußrohr (2) und auf die Außenfläche des Kanalrohrs (1) ein Auflagering (5) gelegt wird, die gemeinsam mit der Ringdichtung (6) mit der Verspanneinrichtung (4) verspannt wird.

4. Verfahren nach Anspruch 1 bis 3, dadurch gekennzeichnet, daß das Anschlußrohr (2) in die Öffnung (11) in einem zwischen 20° und 90° zur Richtung der Längsachse des Kanalrohres (1) liegenden Winkel eingeschoben und verspannt wird.

5. Verfahren nach Anspruch 1 bis 4, dadurch gekennzeichnet, daß ein Kunststoffschaum (18) mit Hilfe eines Einbringungs-Lenk- und Verteilungssystems (3, 13, 15, 16, 17) von außerhalb der Außenfläche (111) des Kanalrohrs (1) in einen durch die Abzweigöffnung (11) und das Anschlußrohr (2) gebildeten umlaufenden Raum (24) gelenkt wird, der nach dem Erstarren ein Schaumdichtungs- und Halterungselement (19) ausbildet.

6. Verspannbares Anschlußrohr für ein Kanalrohr, das eine Abzweigöffnung besitzt, zum Versehen mit einer Abzweigung unter Durchführung des Verfahrens nach einem der vorhergehenden Ansprüche 1 bis 5, mit einer an einem Ende des Anschlußrohres (2) angeordneten Dichtungshaltekammer (10), in die eine Ringdichtung (6) eingelegt ist, die eine über die Außenseite der Dichtungshaltekammer (10) reichende Dichtungslippe (7) mit einem eine Endverdickung (8) ausbildenden oder mit einer Endverdickung versehenen Ende besitzt und einer Verspanneinrichtung (4), mit der die Ringdichtung (6) verspannbar ist.

7. Anschlußrohr nach Anspruch 6, dadurch gekennzeichnet, daß die Ringdichtung (6) im wesentlichen L-förmig profiliert ist, und daß der untere Schenkel in die Dichtungslippe (7) übergeht.

8. Anschlußrohr nach Anspruch 6 oder 7, dadurch gekennzeichnet, daß das Ende der Dichtungslippe (7) eine Verdickung (8) trägt.

9. Anschlußrohr nach Anspruch 6 bis 8, dadurch gekennzeichnet, daß an der Innenseite der L-förmigen Ringdichtung (6) wenigstens eine Einbringung (12) angebracht ist.

10. Anschlußrohr nach wenigstens einem der Ansprüche 6 bis 9, dadurch gekennzeichnet, daß die Ringdichtung (6) mit der Dichtungslippe (7) und der angeformten Endverdickung (8) aus einem Gummi besteht.

11. Anschlußrohr nach einem der vorhergehenden Ansprüche 6 bis 10, dadurch gekennzeichnet, daß um das Anschlußrohr (2) und auf die Außenfläche des Kanalrohrs (1) ein Auflagering (5) gelegt ist, der gemeinsam mit der Ringdichtung (6) mit der Verspanneinrichtung (4) verspannt ist.

12. Anschlußrohr nach Anspruch 11, dadurch gekennzeichnet, daß die Verspanneinrichtung ein Gewindering (4) ist, der mit seinem Innengewinde in einem Außengewinde (14) des Anschlußrohres greift.

13. Anschlußrohr nach wenigstens einem der Ansprüche 6 bis 12, dadurch gekennzeichnet, daß das Anschlußrohr (2) mit der angeformten Dichtungshaltekammer (10) aus Kunststoff besteht.

14. Anschlußrohr nach wenigstens einem der Ansprüche 6 bis 13, dadurch gekennzeichnet, daß das Anschlußrohr (2) einen durch ein Innenrohr (9) begrenzten Mantelbereich umfaßt, der oberhalb der Dichtungshaltekammer (10) ansetzt und bis über die Außenseite des Kanalrohres (1) reicht.

15. Anschlußrohr nach wenigstens einem der Ansprüche 6 bis 14, dadurch gekennzeichnet, daß in das Anschlußrohr (2) ein Einbringungs-Lenk- und Verteilungssystem integriert ist, mit dem ein Kunststoffschaum (18) in einen durch das Anschlußrohr (12) und die Öffnung (11) gebildeten Raum (24) so einbringbar ist, daß nach dessen Aushärtung in den Raum (24) ein Schaumstoffdichtungs- und -Halterungselement (19) angeordnet ist.

16. Anschlußrohr nach wenigstens einem der Ansprüche 6 bis 15, dadurch gekennzeichnet, daß das Innenrohr (9) und das Anschlußrohr (2) einen Hohlraum (3) umschließt, der im Bereich der Außenfläche (111) mit einer Eintrittsausnehmung (13) und im Bereich der Innenfläche (112) des Kanalrohrs (1) mit wenigstens einer Austrittsausnehmung (15, 16, 17) im Anschlußrohr (2) versehen ist, die das Einbringungs-Lenk- und Verteilungssystem bilden.

## Claims

1. Method of connecting a duct pipe (1) in a sealing manner to a connecting pipe (2), wherein the connecting pipe (2) is provided at one end with a circumferential seal retaining recess (10) and the method comprises the following steps:
- Provide a branch orifice (11) in the duct pipe (1),
- Place into the seal retaining recess (10) an annular seal (6) which comprises a seal lip (7) which extends beyond the outer side of the seal retaining recess and comprises an end providing or forming a flanged end portion (8),
- First, push the connecting pipe (2) with the seal retaining recess (10) into the orifice (11) to the extent that the seal lip (7), which deflects inwards into the seal retaining recess (10) during the insertion process, reaches below the inner edge of the duct pipe (1) and deflects outwards,
- Secondly, draw the connecting pipe (2) outwardly in the orifice (11) and clamp, so that the seal lip (7) comprising the flanged end portion (8) seals the gap between the seal retaining recess (10) and the inner surface (112) of the duct pipe (1).

2. Method according to claim 1, characterised in that the connecting pipe (2) is clamped with respect to the duct pipe (1) with the aid of a clamping device (4) known per se.

3. Method according to claim 2, characterised in that an adaptor ring (5) is placed around the connecting pipe (2) and on the outer surface of the duct pipe (1), the said adaptor ring together with the annular seal (6) being clamped by means of the clamping device (4).

4. Method according to claim 1 to 3, characterised in that the connecting pipe (2) is inserted and clamped into the orifice (11) at an angle lying between 20° and 90° with respect to the direction of the longitudinal axis of the duct pipe (1).

5. Method according to claim 1 to 4, characterised in that a synthetic material foam (18), which after hardening forms a foam sealing and retaining member (19), is directed with the aid of an injection, guidance and distribution system (3, 13, 15, 16, 17) from outside the outer surface (111) of the duct pipe (1) into a circumferential space (24) formed by virtue of the branch orifice (11) and the connecting pipe (2).

6. Connecting pipe for a duct pipe, which connecting pipe can be clamped and comprises a branch orifice in order to provide a branch whilst carrying out the method according to any of the preceding claims 1 to 5, having a seal retaining recess (10) disposed at one end of the connecting pipe (2), into which seal retaining recess is placed an annular seal (6) which comprises a seal lip (7) which extends beyond the outer side of the seal retaining recess (10) and which comprises an end forming a flanged end portion (8) or provided with a flanged end portion, and a clamping device (4) with which the annular seal (6) can be clamped.

7. Connecting pipe according to claim 6, characterised in that the annular seal (6) comprises a substantially *L* - shaped profile and that the lower arm becomes the seal lip (7).

8. Connecting pipe according to claim 6 or 7, characterised in that the end of the seal lip (7) comprises a flanged portion (8).

9. Connecting pipe according to claim 6 to 8, characterised in that at least one annular groove (12) is provided on the inner side of the *L*-shaped annular seal (6).

10. Connecting pipe according to at least one of the claims 6 to 9, characterised in that the annular seal (6) having the seal lip (7) and the integral flanged end portion (8) consists of rubber.

11. Connecting pipe according to any one of the preceding claims 6 to 10, characterised in that an adaptor ring (5) is placed around the connecting pipe (2) and on the outer surface of the duct pipe (1), the said adaptor ring together with the annular seal (6) being clamped by means of the clamping device (4).

12. Connecting pipe according to claim 11, characterised in that the clamping device is a threaded ring (4) which engages with its inner thread in an outer thread (14) of the connecting pipe.

13. Connecting pipe according to at least one of claims 6 to 12, characterised in that the connecting pipe (2) having the integral seal retaining recess (10) consists of a synthetic material.

14. Connecting pipe according to at least one of claims 6 to 13, characterised in that the connecting pipe (2) encompasses a peripheral region defined by an inner pipe (9), which region commences above the seal retaining recess (10) and extends beyond the outer side of the duct pipe (1).

15. Connecting pipe according to at least one of claims 6 to 14, characterised in that an injection, guidance and distribution system is integrated in the connecting pipe (2) and used to introduce a synthetic material foam (18) into a space (24) formed by virtue of the connecting pipe (12) and the orifice (11) in such a manner that after the foam hardens, a foam sealing and retaining member (19) is disposed in the space (24).

16. Connecting pipe according to at least one of claims 6 to 15, characterised in that the inner pipe (9) and the connecting pipe (2) encompasses a hollow space (3) which is provided in the region of the outer surface (111) with an inlet orifice (13) and in the region of the inner surface (112) of the duct pipe (1) with at least one outlet orifice (15, 16, 17) in the connecting pipe (2), which orifices form the injection, guidance and distribution system.

## Revendications

1. Procédé pour raccorder hermétiquement un conduit d'égout (1) à un tuyau de raccordement (2) qui est pourvu à une extrémité d'une chambre de support de joint (10) circulaire, comprenant les étapes opératoires suivantes :
- le conduit d'égoût (1) est équipé d'une ouverture de branchement (11),
- un joint annulaire (6) est inséré dans la chambre de support de joint (10), lequel joint annulaire possède une lèvre d'étanchéité (7) qui s'étend au-delà de la face extérieure de la chambre de support de joint et comporte une extrémité pourvue d'un épaississement terminal (8) ou réalisée en tant que tel,
- le tuyau de raccordement (2) est poussé avec la chambre de support de joint (10) dans l'ouverture (11) et ce jusqu'à ce que la lèvre d'étanchéité (7) repliée dans la chambre de support de joint (10) lors de l'introduction se place sous le bord intérieur du conduit d'égout (1) et soit dépliée,
- le tuyau de raccordement (2) est ensuite tiré vers l'extérieur dans l'ouverture (11) et est serré de sorte que la lèvre d'étanchéité (7) obture, avec l'épaississement terminal (8), l'interstice entre la chambre de support de joint (10) et la surface intérieure (112) du conduit d'égout (1).

2. Procédé selon la revendication 1, caractérisé en ce que le serrage du tuyau de raccordement (2) par rapport au conduit d'égout (1) s'effectue à l'aide d'un dispositif de serrage (4) connu en soi.

3. Procédé selon la revendication 2, caractérisé en ce que l'on place autour du tuyau de raccordement (2) et sur la surface extérieure du conduit d'égoût (1), une bague d'appui (5) qui est serrée conjointement avec le joint annulaire (6), à l'aide du dispositif de serrage (4).

4. Procédé selon les revendications 1 à 3, caractérisé en ce que le tuyau de raccordement (2) est introduit dans l'ouverture (11) selon un angle de 20 à 90° par rapport à la direction de l'axe longitudinal du conduit d'égout (1) et est serré.

5. Procédé selon les revendications 1 à 4, caractérisé en ce qu'une mousse synthétique (18) est dirigée, à l'aide d'un système d'introduction, de guidage et de répartition (3, 13, 15, 16, 17), à partir de l'extérieur de la surface extérieure (111) du conduit d'égout (1) dans une chambre (24) circulaire formée par l'ouverture de branchement (11) et le tuyau de raccordement (2), laquelle mousse forme, après solidification, un élément mousse d'étanchéité et de support (19).

6. Tuyau de raccordement serrable pour un conduit d'égout qui comporte une ouverture de branchement, destiné à être pourvu d'un branchement moyennant la mise en oeuvre du procédé selon l'une des revendications 1 à 5, comportant une chambre de support de joint (10) qui est disposée à une de ses extrémités et dans laquelle est inséré un joint annulaire (6) qui possède une lèvre d'étanchéité (7) qui s'étend au-delà de la face extérieure de la chambre de support de joint (10) et comporte une extrémité formant un épaississement terminal (8) ou pourvue d'un épaississement terminal, et un dispositif de serrage (4) avec lequel le joint annulaire (6) peut être serré.

7. Tuyau de raccordement selon la revendication 6, caractérisé en ce que le joint annulaire (6) a un profil sensiblement en forme de L et que la barre inférieure se prolonge par la lèvre d'étanchéité (7).

8. Tuyau de raccordement selon la revendication 6 ou 7, caractérisé en ce que l'extrémité de la lèvre d'étanchéité (7) porte un épaississement (8).

9. Tuyau de raccordement selon les revendications 6 à 8, caractérisé en ce que au moins un cran (12) est réalisé sur la face intérieure du joint annulaire (6) en forme de L.

10. Tuyau de raccordement selon au moins l'une des revendications 6 à 9, caractérisé en ce que le joint annulaire (6), comportant la lèvre d'étanchéité (7) et l'épaississement terminal (8) moulé, est en caoutchouc.

11. Tuyau de raccordement selon l'une des revendications 6 à 10, caractérisé en ce qu'on place autour du tuyau de raccordement (2) et sur la surface extérieure du conduit d'égout (1), une bague d'appui (5) qui est serrée conjointement avec le joint annulaire (6), à l'aide du dispositif de serrage (4).

12. Tuyau de raccordement selon la revendication 11, caractérisé en ce que le dispositif de serrage est une bague taraudée (4) qui s'engage avec son taraudage dans un filetage (14) du tuyau de raccordement.

13. Tuyau de raccordement selon au moins l'une des revendications 6 à 12, caractérisé en ce que le tuyau de raccordement (2) avec la chambre de support de joint (10) moulée est en matière plastique.

14. Tuyau de raccordement selon au moins l'une des revendications 6 à 13, caractérisé en ce que le tuyau de raccordement (2) entoure une zone d'enveloppe limitée par un tuyau intérieur (9), laquelle zone débute au-dessus de la chambre de support de joint (10) et s'étend jusque au-delà de la face extérieure du conduit d'égout (1).

15. Tuyau de raccordement selon au moins l'une des revendications 6 à 14, caractérisé en ce qu'il est intégré dans le tuyau de raccordement (2), un système d'introduction, de guidage et de répartition qui permet d'introduire une mousse synthétique (18) dans une chambre (24) formée par le tuyau de raccordement (2) et l'ouverture (11) de telle sorte qu'après durcissement, ladite mousse forme dans la chambre (24) un élément mousse d'étanchéité et de support (19).

16. Tuyau de raccordement selon au moins l'une des revendications 6 à 15, caractérisé en ce que le tuyau intérieur (9) et le tuyau de raccordement (2) entourent une cavité (3) qui est pourvue dans la zone de la surface extérieure (111), d'un orifice d'entrée (13) et dans la zone de la surface intérieure (112) du conduit d'égout (1), d'au moins un orifice de sortie (15, 16, 17) dans le tuyau de raccordement (2), lesquels orifices forment le système d'introduction de guidage et de répartition.
